# EUROPEAN PATENT SPECIFICATION

(11) **EP 2 060 121 B1**
(45) Date of publication and mention of the grant of the patent: **06.11.2013**
(21) Application number: 07808065.2
(22) Date of filing: 05.09.2007
(51) Int. Cl.: H04N 7/30, H04L 1/00

(54) **METHOD OF TRANSMITTING LINK-ADAPTIVE TRANSMISSION OF DATA STREAM IN A MOBILE COMMUNICATION SYSTEM**
VERFAHREN ZUM SENDEN EINER STRECKENADAPTIVEN ÜBERTRAGUNG EINES DATENSTROMS IN EINEM MOBILKOMMUNIKATIONSSYSTEM
PROCÉDÉ POUR LA TRANSMISSION ADAPTATIVE DE LIAISON D'UN FLUX DE DONNÉES DANS UN SYSTÈME DE COMMUNICATION MOBILE

(30) Priority: 05.09.2006 US 824591 P; 11.09.2006 KR 20060087672; 29.09.2006 KR 20060096191
(43) Date of publication of application: 20.05.2009
(73) Proprietor: LG Electronics Inc., Yeongdeungpo-gu Seoul 150-721 (KR)
(72) Inventor: KIM, Taek Soo, Seoul 137-724 (KR); JEON, Beom Jin, Seoul 137-724 (KR); CHO, Hyeon Cheol, Seoul 137-724 (KR)
(74) Representative: Urner, Peter
(86) International application number: PCT/KR2007/004271
(87) International publication number: WO 2008/030032

(56) References cited:
- EP-A1- 1 328 122
- EP-A2- 1 465 375
- WO-A1-03/107673
- WO-A2-2005/017714
- WO-A2-2006/042330
- US-A1- 2004 203 759
- US-A1- 2004 235 489

## Description

### TECHNICAL FIELD

The present invention relates to a wireless communication system, and more particularly, to a method of transmitting link-adaptive data in a wireless communication system, a method of controlling transmission of the same, a method of processing the same, and a user device for the same.

### BACKGROUND ART

Generally, in case of that audio or video data is transmitted on a radio channel, a reception quality in a receiving size is considerably affected by a status of a radio link. In particular, audio data or video streams are transmitted by wireless from a DVD player, a camcorder, a digital camera, a personal computer or a network and then displayed by real time via a display device such as a digital television (DTV), an LCD monitor and the like. In doing so, a change of a radio link status may cause considerable deterioration to a displayed image quality.

Under the above circumstances, isochronous transmission secures that data can keep flowing at a constant speed to enable the display device to receive and display the audio or video streams on a screen. Yet, despite the isochronous transmission, in order for a receiving side to secure a reception quality, a channel status should be maintained to enable data transmission at a data rate greater than or at least equal to a data rate of an original data source (source rate).

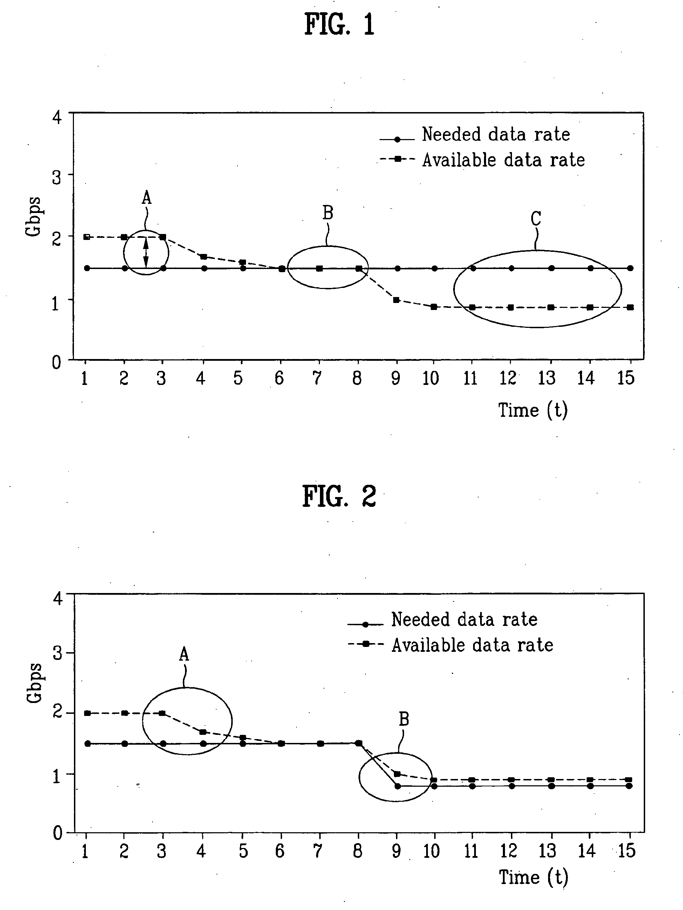

FIG. 1 is a diagram for a status that a reception quality is changed in a situation that a channel status keeps varying. Referring to FIG 1, in order for a display device to receive an audio and/or video stream from a specific device and display the received stream on a screen, a data rate equal to or greater than that of source data needs to be secured. In FIG. 1, a solid line indicates a data rate needs to be guaranteed to secure a reception quality over a predetermined level and a dotted line indicates a data rate supportable by a system in correspondence to a change of a channel status. An area 'A' indicates an area in which an available data rate is higher than a needed data rate. So, the area 'A' can secure a reception quality over a predetermined level. An area 'B' indicates an area in which an available data rate is almost equal to a needed data rate due to a gradually deteriorated channel status. In the area 'B', a reception error rate in a receiving side increases. So, a reception quality gets worse. An area 'C' is an area in which an available data rate is considerably lower than a needed data rate due to a poor channel status. In the area 'C', a state of a broken video image continues. So, a reception quality is considerably degraded.

As mentioned in the foregoing description, in case of transmitting a large-scale audio or video stream at high speed via a radio link, a status of the radio link considerably affects a reception quality. However, in case of isochronous transmission, in which a display device receives an audio or video stream from another device and then displays the received stream on a screen, a change of a channel status may affect a reception quality considerably. Hence, the demand for a scheme of coping with a change of a channel status adaptively in a wireless communication system has risen.

WO 03/107673 A1 discloses a method and apparatus for dynamic data rate adjustment of a wireless transport channel including processing that begins with monitoring channel characteristics of a wireless transport channel by one of a plurality of client modules within a wireless multimedia system. The monitoring is done at or below a received packet rate to determine variations in the channel characteristics on a packet-by-packet basis or on a group-of-packets by group-of-packets basis. The processing continues when the client module determines whether the variations in the channel characteristics affect the data rate of data contained in the packets received via the wireless transport channel. When the variations in the channel characteristics affect the data rate, the client module provides data rate adjustment feedback to a multimedia server of the wireless multimedia system via the wireless transport channel. The processing continues when the multimedia server adjusts the data rate of the data contained in the packets being transported via the wireless transport channel in accordance with the data rate adjustment feedback.

US 2004/0235489 A1 discloses a method and apparatus for communicating through a wireless network including (a) examining quality of service (QoS) of a current channel; and (b) if it is determined that the QoS of the current channel is below a predetermined standard, receiving data from a device connected to the wireless network and transmitting the data to another device connected to the wireless network. Accordingly, when channel quality is poor, higher QoS can be guaranteed until a new channel is established.

WO 2006042330 A2 relates to systems and methods for compressing and decompressing still image and video image data in mobile devices and to corresponding mobile device architectures and service platform architectures for transmitting, storing, editing, and transcoding still images and video images over wireless and wired networks and for viewing them on display-enabled devices.

### DISCLOSURE OF THE INVENTION

Accordingly, the present invention is directed to a method of transmitting link-adaptive data in a wireless communication system, a method of controlling transmission of the same, a method of processing the same, and a user device for the same that substantially obviate one or more of the problems due to limitations and disadvantages of the related art.

An object of the present invention is to provide a method of coping with a change of a channel status adaptively in a wireless communication system or on a wireless network.

Another object of the present invention is to provide a control method in a specific protocol layer of a transmitting side and a data processing method thereof to adaptively cope with a channel status in a wireless communication system or on a wireless network.

Another object of the present invention is to provide a method of processing data and a user device for the same, by which a data rate of a physical layer can be controlled.

Objects of the present invention are achieved by subject matters of the independent claims.

In a wireless communication system, in order for a specific device to receive and output an audio or video stream from another device by securing a quality over a predetermined level, a data rate equal to or greater than a data rate of source data (hereinafter named 'source rate') needs to keep being supported. It is able to consider two kinds of methods for continuously supporting a data rate over a source rate on a radio link having a variable status as follows.

First of all, a data rate supportable by a system is varied in accordance with a variable channel status. In particular, in a situation that a channel status is being degraded, a system is able to match a data rate to a source rate in a manner of raising an available data rate using the entire available channel resources despite considering the degraded channel status. Yet, considering that channel resources are limited, limitation is put on this method.

Secondly, a data rate supported by a system can be carried in a manner of changing a source rate in accordance with a variable channel status. In case that a channel status gets degraded, a data rate supportable by a system is unable to avoid being lowered. So, a balance between a source rate and a data rate supportable by a system can be kept in a manner of lowering the source rate to keep up with the lowered data rate.

FIG. 2 is a diagram for explaining the above-explained second method in detail. Referring to FIG. 2, an area 'A' is an area in which an available data supportable by a system is higher than a needed data rate requested in accordance with a source rate. In the area 'A', a problem of something in particular is not generated from a receiving side. In case that a channel status gets worse gradually, an available data rate supportable by a system becomes lower than a needed data rate requested for the source rate while the source rate is maintained. So, a reception quality in the receiving side will be considerably deteriorated. In this case, by lowering the source rate to be equal to or smaller than the available data rate supportable by the system in an area 'B' shown in FIG 2, it is able to prevent extreme reception quality degradation such that a video image is broken in the receiving side. For instance, if it is detected that a channel status is degraded in the course of transporting an A/V data stream in 1080p data format, a transmitting device can lower a source rate by converting the data format of the A/V data stream to 1080i data format.

According to an embodiment of the present invention, in transmitting A/V data stream in a transmitting device of a wireless network, a data transmitting method according to the present invention comprises the steps of transmitting the A/V data stream having a first data format to a receiving device, deciding to change a data format of the A/V data stream to be transmitted to the receiving device into a second data format, if a quality of a channel for carrying the A/V data stream to the receiving device is changed, and transmitting the A/V data stream having the second data format to the receiving device.

According to an embodiment, a control method, which is for A/V data transmission in a transmitting device included in a wireless network, comprises the steps of transmitting A/V data stream having a first data format to a receiving device, if a quality of a channel for carrying the A/V data stream is changed, notifying that the channel quality is changed to an upper layer from a first protocol layer, deciding, at the upper layer, to change a data format of the A/V data stream to be transmitted to the receiving device into a second data format, and transmitting the A/V data stream having the second data format to the receiving device.

According to an embodiment, a data processing method, which is for link-adaptive data transmission in a protocol layer of a transmitting device for transmitting video data, comprises the steps of receiving data bits representing color information of pixels constituting a video frame from an upper layer, forming a first data unit including data bits partially selected from total data bits representing color information of each pixel, and generating a second data unit including at least two first data units.

According to an embodiment, a user device comprises an image scaler adapted to adjust a source rate of inputted audio or video data, a first data processing module adapted to perform data processing to transmit input data on a low-speed channel, and a second data processing module adapted to perform the data processing to transmit the audio or video data having a source rate adjusted by the image scaler via a high-speed channel.

### DESCRIPTION OF DRAWINGS

FIG. 1 is a diagram for a status that a reception quality is changed in a satiation that a channel status keeps varying.
FIG. 2 is a diagram for explaining conceptional features of the present invention.
FIG. 3 is a block diagram of a configuration of WVAN.
FIG. 4 is a flowchart for a process of establishing a connection to transport A/V data stream from a source device to a sink device in a previously set WVAN.
FIG. 5 is a flowchart of a procedure according to one preferred embodiment of the present invention.
FIG. 6 is a flowchart of a procedure according to another preferred embodiment of the present invention.
FIG. 7 is a diagram for an exemplary scheme for changing a data rate in a physical layer according to one preferred embodiment of the present invention.
FIG 8 is a diagram of an example of a data packet format according to one preferred embodiment of the present invention.
FIG 9 is a diagram to explain CRD decoding scheme performed in MAC/PHY layer of a sink device according to one preferred embodiment of the present invention.
FIG 10 is a block diagram of a physical layer of a device according to one embodiment of the present invention.
FIG 11 is a diagram of an example of a detailed configuration of a compressor 12 shown in FIG 10.
FIG. 12 and FIG. 13 are block diagrams for exemplary configurations of LRP transmitting module and HRP transmitting module, respectively.

### BEST MODE FOR CARRYING OUT THE INVENTION

Reference will now be made in detail to the preferred embodiments of the present invention, examples of which are illustrated in the accompanying drawings.

In the embodiments explained in the following disclosure, the technical features of the present invention are exemplarily applied to WVAN (wireless video area network) that is a sort of WPAN (wireless private access network). The WVAN is a wireless network capable of providing throughput over 4.5Gbps to transmit 1080 A/V stream without compression using 60GHz frequency band.

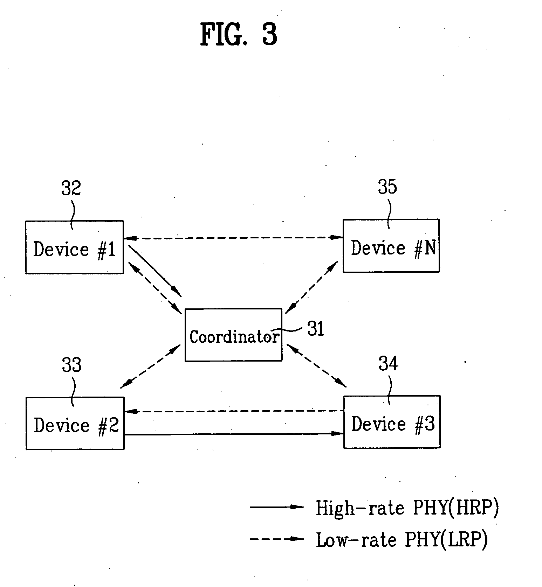

FIG 3 shows an example of a configuration of WVAN. Referring to FIG 3, a WVAN includes at least two or more user devices 31 to 35 and one of them works as a coordinator 31. The coordinator 31 plays a role in providing a basic timing of the WVAN, a role in controlling a demand for QoS (quality of service), and the like. In particular, the WVAN supports such a physical layer as HRP (high-rate physical layer) and LRP (low-rate physical layer). The HRP is a physical layer capable of supporting a data rate over 1Gbps. And, the LRP is a physical layer capable of supporting a data rate of several Mbps. The HRP is highly direction and used for transmissions of isochronous data stream, asynchronous data, MAC command and A/V control data via unicast direction. And, the LRP supports a directional or omni-directional mode and used for transmissions of beacon, asynchronous data, and MAC command via unicast or broadcast.

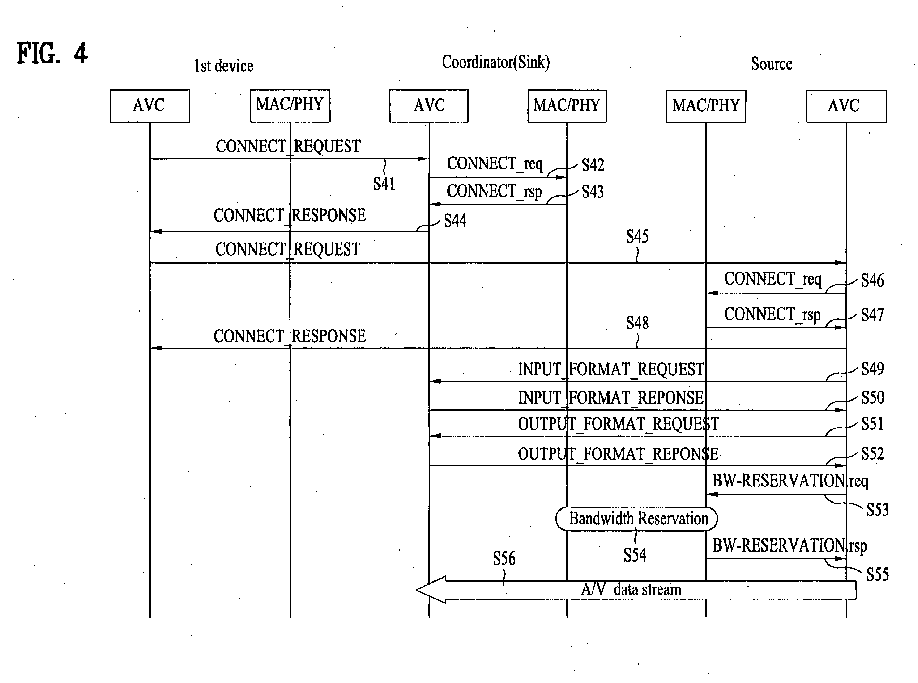

FIG. 4 is a flowchart to explain a process for establishing a connection to transport A/V (audio and/or video) data stream to a sink device from a source device under the control of a first device (controller) in previously established WVAN. In an example shown in FIG 4, the device works as a coordinator of the WVAN. Alternatively, a separate device can work as a coordinator. Each device includes a physical layer (PHY), a media access control layer (MAC), and an AVC layer. And, the AVC layer controls an A/V stream connection between the source device and the sink device in the WVAN using AVC messages. Moreover, the AVC layer controls other devices (for power on/off, play/stop, etc.) and also controls clock synchronizations (for pixel clock, audio clock, audio-to-video synchronization, etc.).

In this disclosure, A/V data stream or A/V stream includes video and/or audio data stream. Generally, the A/V data stream includes both video and audio streams. Optionally, the A/V data stream can include either the video stream or the audio stream.

Referring to FIG 4, the first device transfers a connection request messages (CONNECT_REQUEST) to the sink device and the source device, respectively [S41, S45]. The connection request message includes an ID of a destination device, to which A/V stream will be transferred), i.e., an ID (DEVID) of the sink device, an ID of the source device, and an operation code. Each of the sink and source devices, which have received the connection request messages, respectively, performs a connection process and then transmits a connection response message (CONNECT_RESPONSE) to the first device [S44, S48].

Having established the connection to the sink device, the source device transmits an input format request message (INPUT_FORMAT _REQUEST) to the sink device to obtain data format information supported by the sink device [S49]. Having received the input format request message, the sink device notifies the data format information supported by the sink device in a manner of transmitting an input format response message (INPUT_FORMAT_RESPONSE) to the source device [S50]. The sink device transmits an output format request message (OUTPUT_FORMAT_REQUEST) including data format information (AVI InfoPacket, Audio InfoPacket) of A/V data to transmit to the source device [S51]. The source device then transmits a corresponding response message (OUTPUT_FORMAT_RESPONSE) to the sink device [S52].

An AVC layer of the source device transfers a BW-RESERVATION.req primitive to a MAC layer to instruct to reserve a bandwidth based on audio/video format information included in the output format request message [S53]. In this case, the BW-RESERVATION.req primitive includes data rate information needed by the source device to transmit A/V data stream to the sink device.

The MAC layer of the source device performs a bandwidth reservation procedure with a MAC layer of the coordinator [S54]. If the bandwidth reservation procedure is successfully completed, the MAC layer of the source device delivers a BW-RESERVATION.rsp primitive to an AVC layer of the source device to notify that the bandwidth has been successfully allocated [S55]. Finally, the source device transmits A/V stream to the sink device via a reserved channel resource [S56].

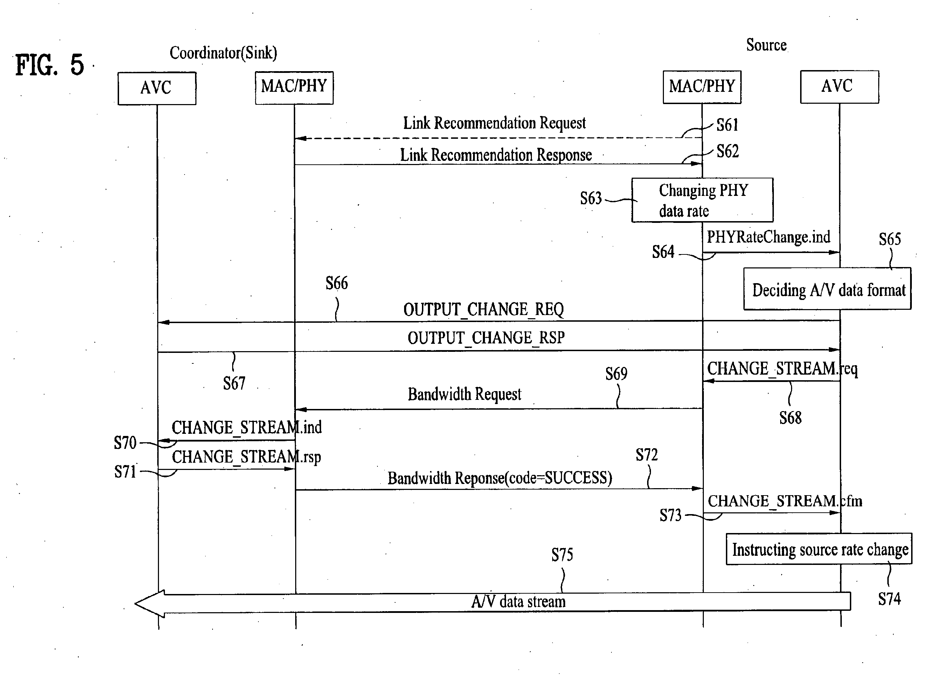

FIG. 5 is a flowchart of a procedure according to one preferred embodiment of the present invention. FIG. 5 relates to an embodiment for controlling a source rate in a manner of changing a data format of A/V data stream in accordance with a channel status changed after completion of a connection between a source device and a sink device for A/V data stream transmission.

The embodiment shown in FIG. 5 assumes that the source device retains capability of varying a source rate by changing a data format of an audio or video stream. For instance, in case of a video data stream, a source rate is determined by resolution, a bit number of RGB or YCbCr data configuring each pixel, a refresh rate of frame, and the like. So, the source rate can be changed in a manner of varying the determining factors. In case of an audio data stream, the source rate can be changed in a manner of varying a sampling rate or bit size of an audio output.

Referring to FIG. 5, the sink device measures a status of channel and a quality of signal from data packets transmitted by the source device. The sink device generates information on channel quality (or signal quality) such as PER (pixel error rate), BER (bit error rate), SNR, and the like based on the measured channel status or signal quality and then transmits the generated information to the source device via a link recommendation response message (Link Recommendation Response) [S62]. The link recommendation response message can be transmitted in response to a sink recommendation request message transmitted to the sink device by the source device [S61]. Although the source device fails to transmit the link recommendation request message, the sink device is able to transmit the link recommendation response message according to a self-decision on such a case that a channel status is abruptly degraded. In case that the source device is capable of using a plurality of link-adaptive schemes, the sink device can recommend that a specific link-adaptive scheme will be used via the link recommendation response message. Alternatively, the source device is able to measure a channel quality in direct using a signal received from the sink device.

A PHY layer of the source device selects a data rate of a physical layer suitable for the channel quality information included in the link recommendation response message transmitted by the sink device or a current channel status obtained from the channel quality directly measured by the source device and then changes a data rate into the selected data rate [S63]. The PHY layer of the source device delivers the fact that the data rate of the physical layer is changed and the changed physical layer data rate to an AVC layer via a PHYRateChange.ind primitive [S64]. In this case, the data rate of the physical layer can be changed in a manner that a modulation scheme or a coding rate in channel coding is varied.

The AVC layer of the source device calculates a source rate to be changed in correspondence to the changed physical layer data rate and then determines a data format of A/V data stream to be changed and outputted in correspondence to the calculated source rate [S65]. For instance, if a channel status is degraded in the course of transmitting A/V data stream having a data format of uncompressed 1080p before change, it is able to decide that the data format of the A/V data stream to be transmitted shall be changed into uncompressed 1080i.

The AVC layer of the source device transmits an output format change request message (OUTPUT_CHANGE_REQ) to inform the sink device of information associated with the changed data format of the A/V data stream [S66] and then receives a corresponding response message (OUTPUT_CHANGE_RSP) from the sink device [S67]. The output format change request message includes the information on the changed data format of the A/V data stream. And, the data format information includes the data type (audio or video) and the changed data format corresponding to the data type.

The source device performs a bandwidth reservation procedure to make a request of a channel resource needed for the changed source rate. In particular, if the AVC layer of the source device makes a bandwidth change request to the MAC layer in accordance with the changed source rate [S68], the MAC layer transmits a MAC layer bandwidth request message of the sink device [S69] and then receives a corresponding message [S72]. The MAC layer of the source device delivers a successful completion of the bandwidth reservation procedure to the AVC layer [S73]. The AVC layer of the source device delivers the source rate information or the A/V data format information determined in the step S56 to an upper layer thereof [S74]. The upper layer or the AVC layer changes the data format of the A/V data stream in accordance with the changed source rate or the data format information of the A/V data stream and then transmits the corresponding A/V data stream [S75].

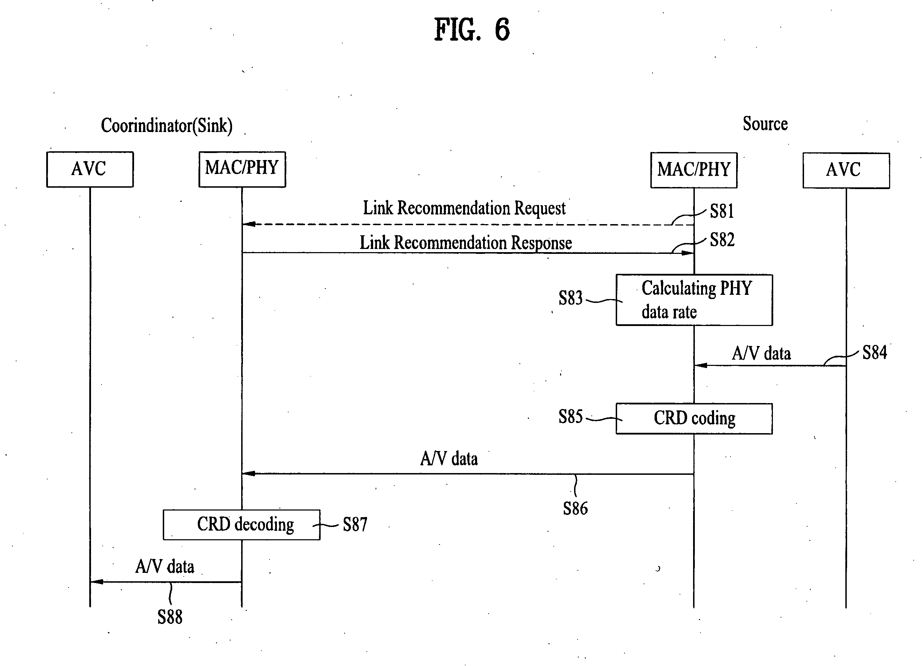

FIG. 6 is a flowchart of a procedure according to another preferred embodiment of the present invention. Like FIG. 5, FIG. 6 relates to an embodiment for changing a source rate in accordance with a channel status changed after completion of a connection between a source device and a sink device for A/V data stream transmission by the procedure shown in FIG 4.

Referring to FIG. 6, a MAC/PHY layer of the source device transmits a link recommendation request message (Link Recommendation Request) to a MAC/PHY layer of the sink device [S81]. A link recommendation response message (Link Recommendation Response) is then transmitted to the MAC/PHY layer of the source device by the MAC/PHY layer of the sink device in response to the link recommendation request message (Link Recommendation Request) {S82}. Details of the link recommendation request message and the link recommendation response message are as good as those in FIG. 5.

The MAC/PHY layer of the source device calculates a data rate of a physical layer suitable for a current channel status provided by channel quality information included in the link recommendation response message [S83]. For instance, if PER (pixel error rate) or BER (bit error rate) provided as the channel quality information by the sink device is equal to or greater than a preset threshold, it means that a current channel status is degraded. If a current physical layer data rate is maintained in a situation that a channel status is degraded, a channel quality parameter such as PER, BER and the like in the sink device will be maintained in the degraded status. So, it is able to improve a reception quality, which can be estimated via the channel quality parameter as the PER, the PBR and the like in a receiving side, only if a physical layer data rate is lowered.

For an example that a physical layer data rate can be changed in a physical channel, there is a change of a digital modulation scheme or a change of a coding rate in channel coding. Digital modulation means that a data bit is mapped to a symbol. And, the physical layer data rate can be changed in a manner of increasing or decreasing a count of data bits mapped to a single symbol by the change of the digital modulation scheme. For instance, QPSK or 16-QAM is usable as symbol mapping scheme in WVAN. If a mapping scheme is changed into QPSK from 16-QAM, a count of data bits mapped to a single symbol is decreased. Hence, a physical layer coding rate is reduced. The coding rate is a parameter associated with a parity bit attached to an information bit by channel coding. So, by changing the coding rate, it is able to vary a valid data rate. Alternatively, the coding rate can be varied each data unit for executing channel coding, e.g., each frame.

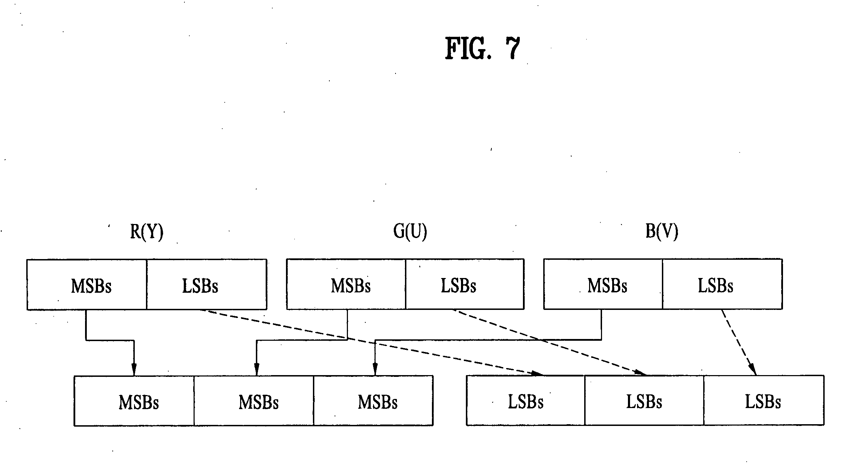

FIG. 7 is a diagram for an exemplary scheme for changing a data rate in a physical layer according to one preferred embodiment of the present invention. Digital video data is the data generated from digitalizing consecutive frames configuring a video. And, each of the frames includes a number of pixels varying in accordance with resolution. Each of the pixels includes data representing such color components as RGB, YCbCr, and the like. For instance, in case of the RGB system, a single pixel can be represented as 8-, 10-, or 12-bit red, green and blue components. The example shown in FIG 7 is an embodiment for reordering a size of RGB data, which are delivered from an upper layer, in a physical layer. Such a data processing scheme shall be named a CRD (color reduction coding) scheme in the following description.

Referring to FIG 6 again, the MAC/PHY layer of the source device receives A/V data forwarded from the AVC layer [S84]. The MAC/PHY layer of the source device performs CRD coding on the A/V data received from the AVC layer [S85]. The CRD coding scheme is explained in detail with reference to FIG. 7 as follows.

Referring to FIG 7, the rest most significant bits (MSBs) corresponding to a plurality of bits configuring each color component except a prescribed count of least significant bits (LSBs) configure a separate data unit (hereinafter called 'MDU (MSB data unit') by the CRD coding. For instance, if each color component is represented as 10 bits, seven upper bits of the corresponding color component can configure a single MDU. In this case, three bits excluded from the MDU configuration are discarded or configure a separate data unit including lower three bits of the corresponding color component to be compressed and transferred. In data bits representing each color component of a single pixel, upper bits are more significant than lower bits. So, if video data is reconfigured with upper bits only and then transmitted to a receiving side, a data rate can be lowered by enabling the receiving side to avoid detecting a difference of reception quality barely.

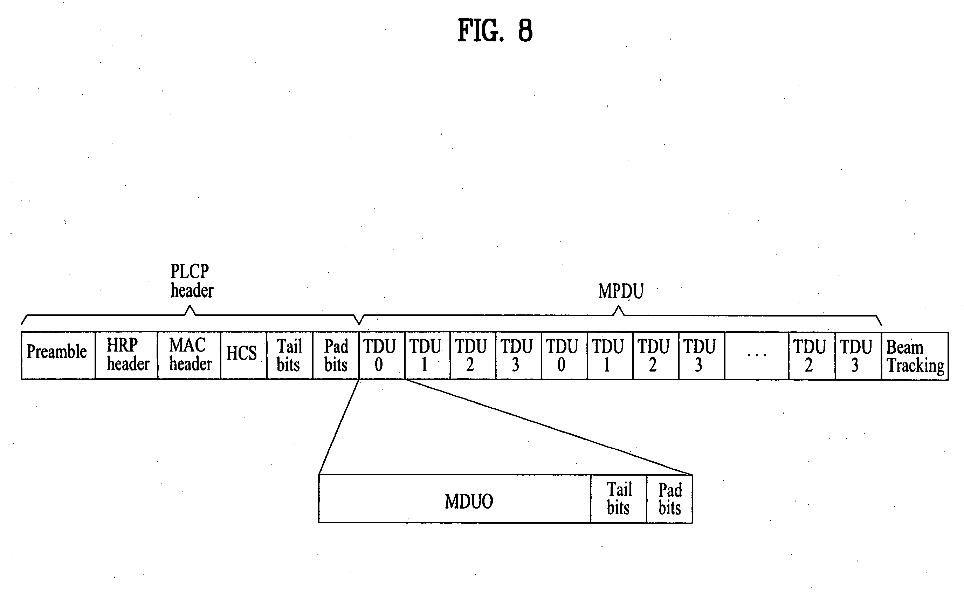

FIG 8 is a diagram of an example of a data packet format according to one preferred embodiment of the present invention. A data packet includes a PLCP header, an MPDU, and a beam tracking field. The PLCP header includes an HRP preamble, an HRP header, a MAC header, and an HCS field. And, the MPDU includes a plurality of transmission data units (TDUs). The HRP preamble is a field that enables a receiving side, i.e., the sink device to perform automatic gain control (AGC), phase estimation, and channel estimation. Each of the TDUs includes a single MDU, tail bits, and padding bits. Alternatively, each of the TDUs can be configured to include at least two MDUs. And, channel coding can be carried out in a manner of applying a different coding rate to each of the TDUs by considering significance of bits configuring the corresponding TDU.

Table 1 shows an example of a data format of HRP header according to one preferred embodiment of the present invention. The HRP header according to one preferred embodiment of the present invention includes an indicator indicating whether CRD coding is used for MPDU and information associated with the CRD coding in case that the CRD coding is used.

**[Table 1]**

| | | | | | |
|---|---|---|---|---|---|
| Bits: 0-3 | 4-23 | 24 | 25-26 | 27-36 | 37-39 |
| HRP mode | MPDU | Beam | Error | UEP offset | CRD |
| index | length | tracking | protection | | |

The HRP header includes an HRP mode index field, an MPDU length field, a beam tracking field, an error protection field, a UEP offset field, and a CRD field. The HRP mode index field indicates a data rate and a modulation scheme used for the MPDU field. The MPDU length field indicates a length of the MPDU field, and the beam tracking field indicates whether beam tracking information is included behind the MPDU. The error protection field indicates what kind of an error protection scheme is used for the MPDU. The error protection scheme can include EEP (equal error protection), UEP (unequal error protection) or CRD scheme. The UEP offset field is a field that indicates an initiating position of UEP coding if UEP scheme is used. The CRD field provides information associated with CRD if CRD scheme is used for MPDU. For instance, if MDU is constructed with seven upper bits of each 10-bit color information and if the rest three lower bits are discarded or transmitted by being compressed, the CRD field provides the corresponding information. For another instance, for RGB data constructed with 24 bits each, four upper bits of each color information can be transmitted to a receiving side.

In FIG. 6, the MAC/PHY layer of the source device performs data processing including CRD coding and then transmits A/V data to the sink device [S86]. The MAC/PHY layer of the sink device performs data processing including CRD coding on the received A/V data [S87] and then delivers the CRD decoded data to the AVC layer [S88].

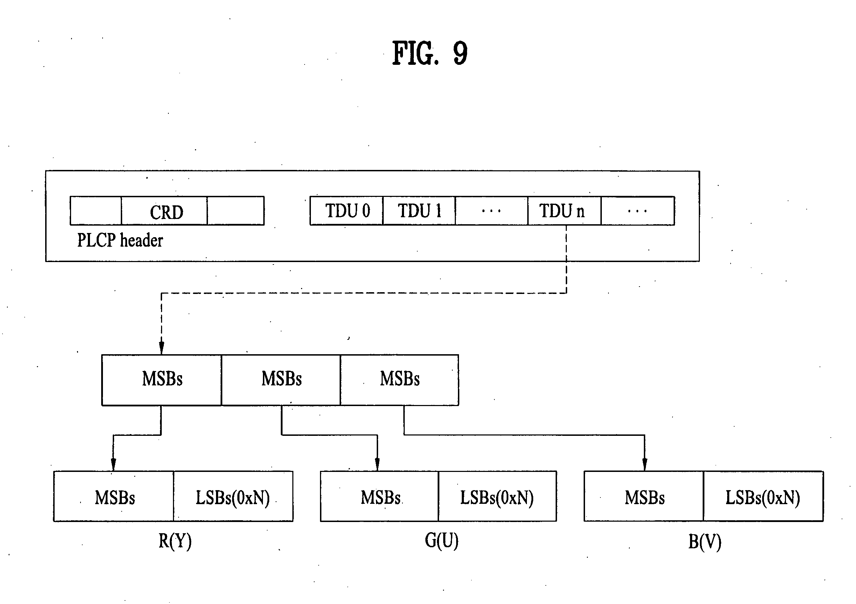

FIG 9 is a diagram to explain CRD decoding scheme performed in the MAC/PHY layer of the sink device according to one preferred embodiment of the present invention. Referring to FIG 9, from the CRD field included in the PLCP header of the received data packet, the MAC/PHY layer of the sink device obtains the information associated with the CRD coding performed by the source device such as a count of upper bits included in the MDU, a scheme for processing the rest lower bits, a compression scheme in case of the compressed lower bits, and the like in each color information of each pixel. The MAC/PHY layer of the sink device reconstructs color information of each pixel using the information obtained from the CRD field. In this case, if the lower bits are discarded by the source device in the course of performing the CRD, data prior to the CDR coding are preferably reconstructed in a manner of padding an average value of the discarded bits. For instance, if four bits are discarded, the discarded four bits must correspond to one of '0000∼1111'. So, the discarded bits are assumed as their average, i.e., '0111' and the corresponding padding is performed. Alternatively, a specific value except the average, e.g., '0000', '0011' or the like can be randomly padded. In case that lower bits are compressed in the course of CRD coding, compression is released to reconstruct original data.

A CRD coding scheme according to one embodiment of the present invention can be used together with a coding rate change scheme in a change of digital modulation scheme or channel coding. In particular, in order to change a physical layer data rate according to a channel status, a needed physical layer data rate is calculated and the CRD coding scheme and at least one of the change of the digital modulation scheme and the coding rate change are then applied together to fit the calculated physical layer data rate.

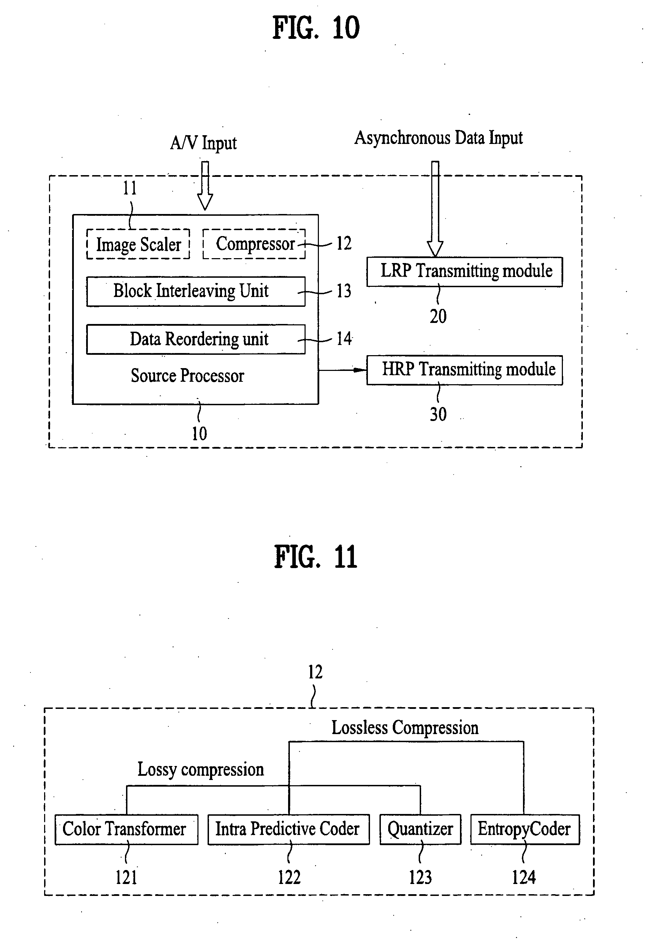

FIG. 10 is a block diagram of a physical layer of a device according to one embodiment of the present invention. The embodiment shown in FIG 10 is a systematically implemented example that adjustment of a source rate according to one feature of the present invention can be performed by a physical layer. Referring to FIG 10, a device according to one embodiment of the present invention includes a video source processor 10, an LRP transmitting module 20, and an HRP transmitting module 30. The video source processor 10 includes an image scaler 11, a compressor 12, a block interleaving unit 13, and a data reordering unit 14.

The image scaler 11 performs image scaling to adjust a source rate of inputted A/V data. The image scaling can be carried out in various ways explained in the following description for example. First of all, an output color space of A/V data is reduced. For instance, 24 bits of an output color space is reduced to 10 bits. Secondly, a pixel count of a video output is scaled. For instance, 1920 x 1080 resolution is reduced to 1280 x 720 resolution. Thirdly, a frame refresh rate of a video output is adjusted. For instance, 60fbps of a video output is reduced to 30fbps. Fourthly, a sampling rate or bit size of an audio output is changed. For instance, 40khz of sampling rate is reduced to 20khz or 16 bits of bit size is reduced to 8 bits. Fifthly, a source rate is adjusted by the aforesaid coding scheme. The above methods can be performed individually or any combination of at least two of them.

The data, which is data processed by the image scaler 11 is additionally data processed by at least one of the block interleaving unit 13 and the data reordering unit 14 and then outputted to the HRP transmitting module 30. Alternatively, the data can be directly outputted to the HRP transmitting module 30 instead of being data processed by the at least one of the block interleaving unit 13 and the data reordering unit 14.

The compressor 12 adjusts the source rate of the A/V data by performing lossy compression or lossless compression on the inputted video data. FIG. 11 is a diagram of an example of a detailed configuration of a compressor 12. In FIG. 11, the compressor includes a plurality of subunits. In particular, the compressor includes a color transformer 121, an intra predictive coder 122, a quantizer 123, and an entropy coder 124. The color transformer 121 transforms a color space and performs downsampling on color data of source data. For instance, it is able to reduce a bit count of pixel data by transforming RGB 4:4:4 into YCrCb 4:2:2. The intra predictive coder 122 reduces spatial redundancy by performing image processing using DPCM (differential pulse coded modulation) or MP (median prediction). The quantizer 123 reduces a bit count of LSB data by logarithmic scale. And, the entropy coder 124 efficiently reduces an average length of a video bit stream processed by the intra predictive coder 122 or the quantizer 123.

Input data can be compressed by one of various methods according to a combination of at least two of the units configuring the compressor 12. For this, two combination types are possible. A first combination type is lossless compression combination. If input data is compressed by the intra predictive coder 122 and the entropy coder 124, compression of video data can be achieved without data loss. A second combination type is lossy compression combination. If data is compressed by a combination including at least one of the color transformer 121 and the quantizer 123, loss of video data is generated.

The block interleaving module 13 and the data reordering unit 14 are modules for supporting UEP. The block interleaving unit performs interleaving on video data according to a predetermined rule by a pixel unit. The data reordering unit 14 reorders a data position of video data according to significance in case of using UEP. And, channel coding is carried out in a manner of applying a different coding rate to the reordered video data according to significance.

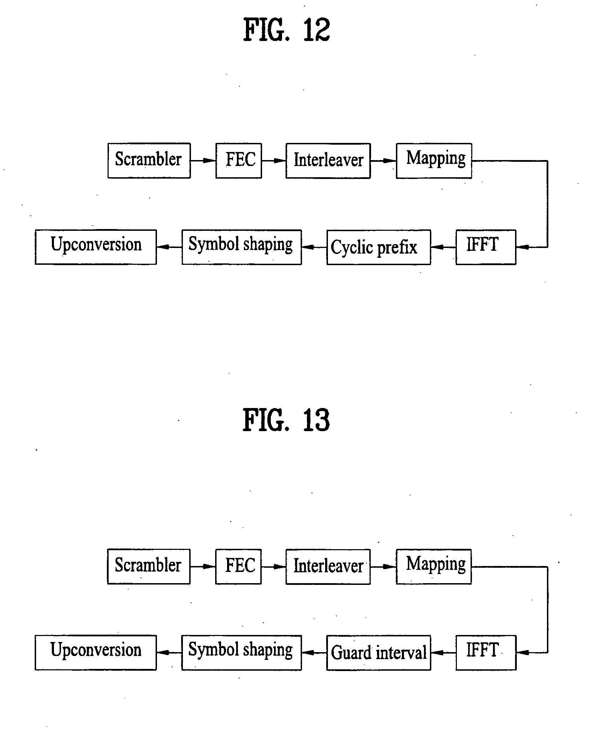

The LRP transmitting module 20 performs data processing to transmit input data such as asynchronous data on LRP channel. The HRP transmitting module 30 performs data processing to transmit the A/V data outputted from the source processor 10 on HRP channel. FIG. 12 and FIG 13 are block diagrams for exemplary configurations of the LRP transmitting module and the HRP transmitting module, respectively. Each of the LRP and HRP transmitting modules respectively shown in FIG. 12 and FIG 13 performs data processing on input data by OFDM. Since elements thereof are known in public, their details are omitted in the following description.

The image scaler 11 or the compressor 12 can be selectively used. So, if the device of a transmitting side attempts to change a source rate using either the image scaler 11 or the compressor 12, relevant information should be provided to a receiving side. For this, the transmitting and receiving sides exchange information indicating whether to adjust the source rate and information about details of a corresponding method to know them in advance.

The above-used terminologies can be replaced by others. For instance; a device can be replaced by a user device (or apparatus), a station or the like. A coordinator can be replaced by a coordinating (or controlling) apparatus, a coordinating (or controlling) device, a coordinating (or controlling) station, a coordinator, a piconet coordinator (PNC), or the like to use.

In the above embodiment, the technical features of the present invention are exemplarily applied to WVAN. And, the technical features of the present invention are applicable to a peer-to-peer communication system or other wireless network systems. The above embodiments are prescribed combinations of elements and features of the present invention. The respective elements or features should be considered selective unless there is separate explicit mention. Each of the elements or features can be implemented in a form not combined with another element or feature. The embodiments of the present invention can be implemented by combining the elements and/or features together in part. An order of operations explained in the embodiments of the present invention can be altered. Partial configurations or features of a prescribed embodiment can be included in another embodiment or replaced by corresponding configurations or features another corresponding embodiment. And, it is apparent that claims failing to have explicit citation relation to each other in 'what is claimed is' can be combined together to construct an embodiment or included as a new claim by correction after filing application.

Embodiments according to the present invention can be implemented by various means, e.g., hardware, firmware, software, and a combination thereof. In case of implementation by hardware, an embodiment of the present invention can be implemented at least one of ASICs (application specific integrated circuits), DSPs (digital signal processors), DSPDs (digital signal processing devices), PLDs (programmable logic devices), FPGAs (field programmable gate arrays), a processor, a controller, a microcontroller, a microprocessor, and the like.

In case of the implementation by firmware or software, one embodiment of the present invention can be implemented as modules, procedures, functions and the like for performing the above-explained functions or operations. Software codes are stored in a memory unit to be driven by a processor. The memory unit is provided inside or outside the processor to exchange data with the processor using various means known in public.

According to embodiments of the present invention, a reception quality in a receiving side keeps being maintained over a predetermined level by adaptively coping with a channel status that is temporally varying in a wireless communication system or wireless network. And, a physical layer data rate can be controlled by CRD scheme according to the present invention.

While the present invention has been described and illustrated herein with reference to the preferred embodiments thereof, it will be apparent to those skilled in the art that various modifications and variations can be made therein without departing from the scope of the invention. Thus; it is intended that the present invention covers the modifications and variations of this invention that come within the scope of the appended claims and their equivalents.

### INDUSTRIAL APPLICABILITY

Accordingly, the present invention is applicable to A/V data stream transmission between devices in a peer-to-peer communication system or wireless network.

## Claims

1. A method of transmitting audio/video A/V data at a source device in a wireless network, the method comprising:
transmitting an A/V data stream having a first data format to a sink device;
changing the first data format of the A/V data stream to be transmitted to the sink device into a second data format, if a quality of a channel for carrying the A/V data stream to the sink device is changed; and
transmitting the A/V data stream having the second data format to the sink device,
**characterized by**
transmitting a request message (S66) from the source device to the sink device after transmitting the A/V data stream having the first data format in order to request a data format change of the A/V data stream, the request message comprising data format information which includes information associated with a data type and a data format to be changed according to the data type; and
receiving a response message (S67) from the sink device in response to the request of the format change,
wherein the A/V data stream having the second data format is transmitted (S75) to the sink device after receiving the response message from the sink device.

2. The method of claim 1, further comprising changing a data rate of the A/V data stream in a physical layer when the channel quality is changed (S63).

3. The method of claim 2, further comprising making a request for a radio resource allocation needed according to the changed physical layer data rate to a coordinator controlling the radio resource allocation in the wireless network.

4. The method of claim 1, wherein a data rate of the second data format is lower than a data rate of the first data format when the quality of the channel is degraded.

5. The method of claim 1, wherein the data format information indicates whether to change a data format of audio data or video data.

6. The method of claim 1, further comprising delivering a primitive (S64) from a lower layer of the source device to an AVC layer of the source device, the primitive comprising information associated with change of the channel quality.

7. The method of claim 6, wherein the request message (S66) is transmitted from the AVC layer of the source device to an AVC layer of the sink device.

8. The method of claim 7, wherein the response message (S67) is received by the AVC layer of the source device from the AVC layer of the sink device.

9. The method of claim 1, further comprising receiving a link recommendation response message (S62) from the sink device, the link recommendation response message comprising information on the channel quality.

10. A system configured to carry out all the method steps in accordance with any one of claims 1 to 9.

## Patentansprüche

1. Verfahren zum Senden von Audio/Video-Daten, A/V-Daten, bei einer Quellenvorrichtung in einem drahtlosen Netz, wobei das Verfahren umfasst:
Senden eines A/V-Datenstroms, der ein erstes Datenformat aufweist, zu einer Senkenvorrichtung;
Ändern des ersten Datenformats des A/V-Datenstroms, der zu der Senkenvorrichtung gesendet werden soll, in ein zweites Datenformat, wenn eine Qualität eines Kanals zum Übertragen des A/V-Datenstroms zu der Senkenvorrichtung geändert wird; und
Senden des A/V-Datenstroms, der das zweite Datenformat aufweist, zu der Senkenvorrichtung,
**gekennzeichnet durch**
Senden einer Anforderungsnachricht (S66) von der Quellenvorrichtung zu der Senkenvorrichtung nach dem Senden des A/V-Datenstroms, der das erste Datenformat aufweist, um eine Datenformatänderung des A/V-Datenstroms anzufordern, wobei die Anforderungsnachricht Datenformatinformationen umfasst, die Informationen enthalten, die einem Datentyp und einem Datenformat, das gemäß dem Datentyp geändert werden soll, zugeordnet sind; und
Empfangen einer Antwortnachricht (S67) von der Senkenvorrichtung in Reaktion auf die Anforderung der Formatänderung,
wobei der A/V-Datenstrom, der ein zweites Datenformat aufweist, nach dem Empfangen der Antwortnachricht von der Senkenvorrichtung zu der Senkenvorrichtung gesendet wird (S75).

2. Verfahren nach Anspruch 1, das ferner Ändern der Datenrate des A/V-Datenstroms in einer Bitübertragungsschicht umfasst, wenn die Kanalqualität geändert wird (S63).

3. Verfahren nach Anspruch 2, das ferner das Stellen einer Anforderung für eine Funkbetriebsmittelzuweisung, die gemäß der geänderten Bitübertragungsschichtdatenrate benötigt wird, an einen Koordinator, der die Funkbetriebsmittelzuweisung in dem drahtlosen Netz steuert, umfasst.

4. Verfahren nach Anspruch 1, wobei eine Datenrate des zweiten Datenformats geringer ist als eine Datenrate des ersten Datenformats, wenn die Qualität des Kanals herabgesetzt wird.

5. Verfahren nach Anspruch 1, wobei die Datenformatinformationen angeben, ob ein Datenformat von Audiodaten oder Videodaten geändert werden soll.

6. Verfahren nach Anspruch 1, das ferner das Liefern eines Grundelements (S64) von einer niedrigeren Schicht zu einer AVC-Schicht der Quellenvorrichtung umfasst, wobei das Grundelement Informationen umfasst, die der Änderung der Kanalqualität zugeordnet sind.

7. Verfahren nach Anspruch 6, wobei die Anforderungsnachricht (S66) von der AVC-Schicht der Quellenvorrichtung zu einer AVC-Schicht der Senkenvorrichtung gesendet wird.

8. Verfahren nach Anspruch 7, wobei die Antwortnachricht (S67) durch die AVC-Schicht der Quellenvorrichtung von der AVC-Schicht der Senkenvorrichtung empfangen wird.

9. Verfahren nach Anspruch 1, das ferner das Empfangen einer Verbindungsempfehlungsantwortnachricht (S62) von der Quellenvorrichtung umfasst, wobei die Verbindungsempfehlungsantwortnachricht Informationen über die Kanalqualität umfasst.

10. System, das konfiguriert ist, alle Schritte des Verfahrens nach einem der Ansprüche 1 bis 9 auszuführen.

## Revendications

1. Procédé de transmission de données audiovisuelles au niveau d'un dispositif source dans un réseau sans fil, le procédé comprenant :
la transmission d'un flux de données audiovisuelles ayant un premier format de données à un dispositif destinataire ;
le changement du premier format de données du flux de données audiovisuelles à transmettre au dispositif destinataire dans un deuxième format de données, si une qualité d'un canal pour porter le flux de données audiovisuelles au dispositif destinataire est changée ; et
la transmission du flux de données audiovisuelles ayant le deuxième format de données au dispositif destinataire,
**caractérisé par**
la transmission d'un message de demande (S66) du dispositif source au dispositif destinataire après la transmission du flux de données audiovisuelles ayant le premier format de données afin de demander un changement de format de données du flux de données audiovisuelles, le message de demande comprenant des informations de format de données incluant des informations associées à un type de données et à un format de données à changer en fonction du type de données ; et
la réception d'un message de réponse (S67) émanant du dispositif destinataire en réponse à la demande de changement de format,
dans lequel le flux de données audiovisuelles ayant le deuxième format de données est transmis (S75) au dispositif destinataire après la réception du message de réponse émanant du dispositif destinataire.

2. Procédé selon la revendication 1, comprenant en outre le changement d'un débit de données du flux de données audiovisuelles dans une couche physique lorsque la qualité de canal est changée (S63).

3. Procédé selon la revendication 2, comprenant en outre la formulation d'une demande pour une allocation de ressource radio nécessaire en fonction du débit de données de couche physique changé auprès d'un coordinateur régulant l'allocation de ressource radio dans le réseau sans fil.

4. Procédé selon la revendication 1, dans lequel un débit de données du deuxième format de données est inférieur à un débit de données du premier format de données lorsque la qualité du canal est dégradée.

5. Procédé selon la revendication 1, dans lequel les informations de format de données indiquent s'il faut changer un format de données des données audio ou des données vidéo.

6. Procédé selon la revendication 1, comprenant en outre la livraison d'une primitive (S64) à partir d'une couche inférieure du dispositif source à une couche AVC du dispositif source, la primitive comprenant des informations associées à un changement de la qualité de canal.

7. Procédé selon la revendication 6, dans lequel le message de demande (S66) est transmis à partir de la couche AVC du dispositif source à une couche AVC du dispositif destinataire.

8. Procédé selon la revendication 7, dans lequel le message de réponse (S67) est reçu par la couche AVC du dispositif source à partir de la couche AVC du dispositif destinataire.

9. Procédé selon la revendication 1, comprenant en outre la réception d'un message de réponse de recommandation de liaison (S62) à partir du dispositif destinataire, le message de réponse de recommandation de liaison comprenant des informations sur la qualité de canal.

10. Système configuré pour effectuer toutes les étapes de procédé selon l'une quelconque des revendications 1 à 9.
